# EUROPÄISCHE PATENTANMELDUNG

(11) **EP 1 411 224 A1**
(43) Veröffentlichungstag der Anmeldung: **21.04.2004**
(21) Anmeldenummer: 02023029.8
(22) Anmeldetag: 16.10.2002
(51) Int. Cl.: F02C 6/12, F02B 37/007, F02B 37/18

(54) **Turbolader und Turbinengehäuse hierfür**

(71) Anmelder: BorgWarner Inc., Troy, Michigan 48084 (US)
(72) Erfinder: Claus, Hartmut, 67269 Grünstadt, Bad Dürkheim (DE); Dörie, Klaus-Peter, 67657 Kaiserslautern (DE); Krauss, Stefan, 67827 Becherbach, Bad Kreuznach (DE)
(74) Vertreter: Balsters, Robert

(57) **Zusammenfassung**

Ein Turbolader (1) weist eine erste Einheit (I) mit einer Rotorwelle (5) auf, die eine Rotationsachse (R) definiert, sowie ein Turbinengehäuse (2), welches mindestens einen Zufuhrkanal (9) für Abgas und mindestens einen Abgasauslaß (10, 19, 20) besitzt und in welches ein Ende der Rotorwelle (5) ragt. In diesem Turbinengehäuse (2) ist mindestens ein Turbinenrotor (4) an dieser Rotorwelle (5) befestigt und so drehbar gelagert, und dessen Peripherie das Abgas zuführbar ist. Ferner ist ein Kompressorgehäuse (3) mit mindestens einem Zufuhrkanal (13) für Luft vorgesehen, in welches das andere Ende der Rotorwelle (5) ragt, an dem wenigstens ein Kompressorrotor (21) befestigt ist, dem die Luft zuführbar ist. Nun ist eine zweite solche Einheit (II), jedoch mit einem mit der ersten Einheit (I) gemeinsamen Turbinengehäuse (2) vorgesehen, an welchem gemeinsamen Turbinengehäuse (2) je ein Zufuhrkanal (9, 9') für je einen der beiden Turbinenrotoren (4, 4') vorhanden ist, wobei sich die Kompressorgehäuse (3, 3') vom gemeinsamen Turbinengehäuse (2) weg erstrecken.

## Beschreibung

### Gebiet der Erfindung

Die Erfindung bezieht sich auf einen Turbolader, mit einer Rotorwelle, die eine Rotationsachse definiert. Ein Ende der Rotorwelle ragt in ein Turbinengehäuse mit mindestens einem Zufuhrkanal für Abgas, in welchem mindestens ein Turbinenrotor an dieser Rotorwelle befestigt und somit drehbar gelagert ist, und dessen Peripherie das Abgas zuführbar ist. Ferner ist ein Kompressorgehäuse mit mindestens einem Zufuhrkanal für Luft vorgesehen, in welches das andere Ende der Rotorwelle ragt. An diesem anderen Ende der Rotorwelle ist wenigstens ein Kompressorrotor befestigt, dem die Luft zugeführt wird. Ferner bezieht sich die Erfindung auf ein Gehäuse für einen solchen Turbolader.

### Hintergrund der Erfindung

Bei Turboladern dieser Art muß zur Erzielung einer gewünschten Leistung ein gewisser Durchmesser gegeben sein. Damit ergeben sich bestimmte Drehmomente, die besonders beim Start auch Trägheitsmomente verursachen und die daher in der Startphase eine gewisse Zeit für den Hochlauf benötigen. Dazu kommt, daß die praktisch vorgegebenen Durchmesser auch einen relativ großen Platzbedarf vorgeben. Zwar wäre es an sich denkbar, zwei kleinere Turbolader einzusetzen, um eine bessere Startcharakteristik zu erreichen, doch vergrößert sich damit insgesamt der Platzbedarf.

### Kurzfassung der Erfindung

Der Erfindung liegt die Aufgabe zugrunde, den eine einfache, kostengünstige und platzsparende Konstruktion einer Strömungsmaschine, und insbesondere eines Turboladers, zu ermöglichen, ohne deshalb die Startcharakteristik zu verschlechtern.

Erfindungsgemäß gelingt dies dadurch, daß eine zweite solche Einheit, jedoch mit einem mit der ersten Einheit gemeinsamen Turbinengehäuse vorgesehen ist, an welchem gemeinsamen Turbinengehäuse je ein Zufuhrkanal für je einen der beiden Turbinenrotoren vorgesehen ist, wobei sich die Kompressorgehäuse vom gemeinsamen Turbinengehäuse weg erstrecken.

Durch das gemeinsame Turbinengehäuse wird die Anordnung zweier, entsprechend kleinerer Turbolader kompakter, wobei die Trägheitsmomente entsprechend reduziert sind und so ein schnellerer Hochlauf erzielt wird. Dabei wäre es im Rahmen der Erfindung durchaus denkbar, auch mehr als zwei Einheiten ein gemeinsames Turbinengehäuse zuzuordnen, obwohl dies im allgemeinen weder notwendig sein wird noch erwünscht ist.

An sich wäre es denkbar, daß beide Turbinenrotoren an einer gemeinsamen Rotorwelle sitzen. Dies bringt jedoch kaum einen Vorteil, weshalb es bevorzugt ist, wenn jede der beiden Einheiten eine gesonderte Rotorwelle besitzt.

Im Rahmen der Erfindung wären verschiedene Anordnungen denkbar, beispielsweise eine "sternförmige" Anordnung, bei der die eine Einheit zur anderen unter einem vorbestimmten Winkel steht. Bevorzugt ist es jedoch, wenn die beiden Einheiten an einer gemeinsamen Rotationsachse liegen. In diesem Falle werden also die Rotationsachsen der Welle(n) miteinander fluchten.

Zur weiteren Vereinfachung ist es vorteilhaft, wenn das gemeinsame Turbinengehäuse auch einen gemeinsamen Abgasauslaß aufweist.

Das erfindungsgemäße Turbinengehäuse zeichnet sich dadurch aus, daß es einen zweiten Rotorraum zur Aufnahme eines Turbinenrotors aufweist, und daß je mindestens ein Zufuhrkanal zu jedem Rotorraum vorgesehen ist.

### Kurzbeschreibung der Zeichnung

Weitere Einzelheiten der Erfindung ergeben sich an Hand der nachfolgenden Beschreibung eines in der Zeichnung schematisch dargestellten bevorzugten Ausführungsbeispieles. Es zeigen:
- Fig. 1: Eine Draufsicht auf den erfindungsgemäßen Turbolader, teilweise mit weggebrochenen Gehäusewänden; und
- Fig. 2: einen gegenüber Fig. 1 um 90° rund um die Gehäuseachse gedrehten Schnitt durch das erfindungsgemäße Gehäuse.

### Detaillierte Beschreibung der Zeichnung

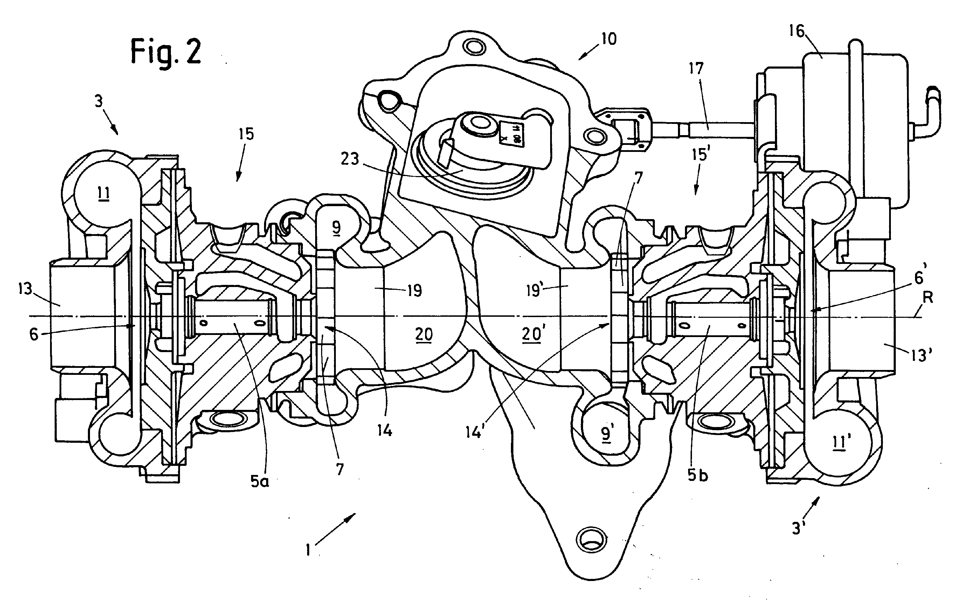

Ein Turbolader 1 weist zwei, an sich jeweils für sich voll funktionsfähige Einheiten I und II auf. Jede Einheit I, II besitzt ein Kompressorgehäuse 3, 3', in dem jeweils ein Kompressorrotor 21, 21' untergebracht ist. Diesem Kompressorrotor 21, 21' wird axial Luft über einen Luftzufuhrkanal 13, 13' (vgl. Fig. 2) zugeführt, er verdichtet sie und drückt sie über einen seinen Kompressorraum 6 bzw. 6' etwa in Spiralform umgebenden LuftAbfuhrkanal 11, 11'.

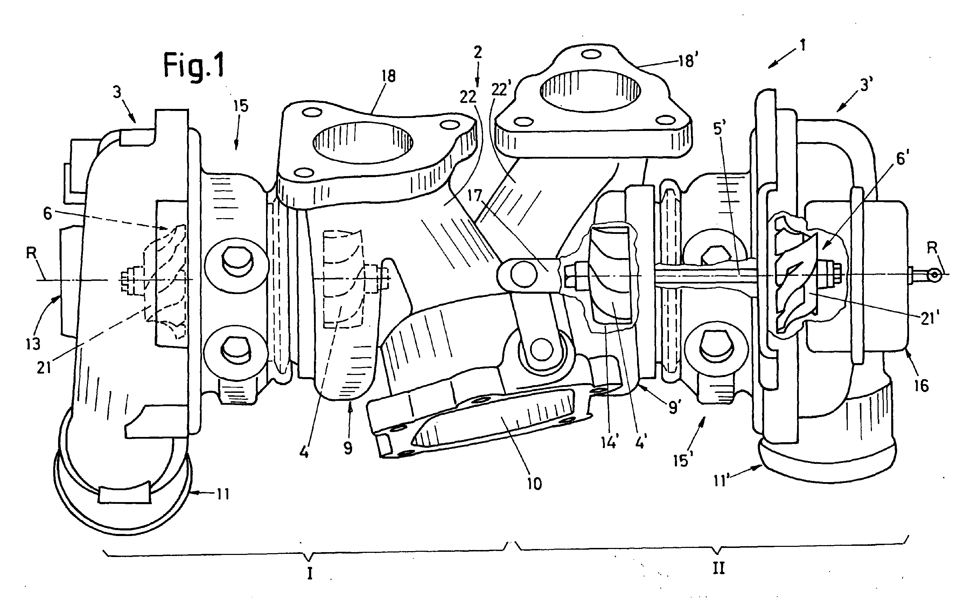

Die beiden Kompressorräume 6, 6' liegen - wie es einer bevorzugten Ausführungsform entspricht - auf ein und derselben Achse R oder (anders ausgedrückt) die Achsen der beiden Einheiten I und II fluchten miteinander, so daß sie praktisch eine einzige Achse R bilden. An dieser Achse R liegt demnach auch jeweils die Rotorwelle (nur die Rotorwelle 5' ist in Fig. 1 sichtbar, in Fig. 2 sind Lagerräume 5a, 5b für die beiden Rotorwellen zu sehen), welche den genannten Rotor 6, 6' an einem Ende - und einen Turbinenrotor 4 bzw. 4' am anderen Ende trägt. Die Lagerung der Wellen ist in einem an das Kompressorgehäuse 3, 3' montierten Lagergehäuse 15, 15' vorgesehen.

Am jeweils anderen Ende jeder Rotorwelle ist also der Turbinenrotor 4, 4' (Fig. 1) in einem Turbinenrotorraum 14, 14' eines beiden Einheiten I und II gemeinsamen Turbinengehäuses 2, das für jede der Einheiten I und II einen gesonderten, am besten aus Fig. 2 ersichtlichen Turbinenrotorraum 14, 14' aufweist. Das gemeinsame Turbinengehäuse 2 ist in an sich bekannter Weise mit dem Lagergehäuse 15 an der einen Seite und mit dem Lagergehäuse 15' an der anderen Seite verbunden.

Vorteilhaft ist eine Bypassverbindung (sog. waste gate) zur Regelung der Zufuhrmenge an Abgas vorgesehen. Im vorliegenden Ausführungsbeispiel (Fig. 1) hat jeder der beiden Zufuhrkanäle 9, 9' eine Bypassverbindung über je einen Bypasskanal 22, 22' zu einem Abgasauslaß 10. Beide Bypasskanäle 22, 22' werden vorteilhaft durch eine gemeinsame Klappenanordnung 23 derart gesteuert, daß die dem jeweiligen Turbinenrotor 4, 4' zugeführte Abgasmenge entsprechend geregelt wird. Zu diesem Zwecke ist ein an sich bekanntes Steuergehäuse 16 mit eingebauter, luftdruckempfindlicher Membrane steuerbar, wobei die Membrane einen am besten aus Fig. 2 ersichtlichen Stößel 17 aufweist. Die Gemeinsamkeit des Steuergehäuses 16 für beide Einheiten I und II sichert dabei eine gleichmäßige und die beiden Einheiten I, II gegenseitige nicht nachteilig beeinflußende Steuerung. Die Übertragung der Bewegung des Stößels 17 auf die Wastegate-Klappe 23 kann in an sich bekannter Weise erfolgen.

Alternativ oder zusätzlich kann jeder der beiden Turbinenrotorräume 14, 14' von einem an sich bekannten Leitgitter 7, insbesondere mit variabler Geometrie, umgeben sein, das beispielsweise über die den beiden Einheiten I und II gemeinsame Steuereinrichtung 16, 17 (oder eine zusätzliche Steuereinrichtung) steuerbar ist.

Jeder der beiden Turbinenrotorräume 14, 14' ist spiralig von einem Zufuhrkanal 9, 9' für Abgas umgeben, der an einen aus Fig. 1 ersichtlichen Zufuhrstutzen 18, 18' angeschlossen ist. Jeder Zufuhrkanal 9, 9' fördert das vom Zufuhrstutzen 18, 18' erhaltene Abgas, falls vorhanden über das jeweilige Leitgitter 7 oder andernfalls auch direkt aus dem über den Bypass 22, 23 geregelten Zufuhrkanal 9, 9', in den jeweiligen Turbinenrotorraum 14 bzw. 14', wo es den darin befindlichen Turbinenrotor 4, 4' (Fig. 1), und damit auch den Kompressorrotor 21, 21', antreibt. Wenn auch Fig. 1 einen leichten Unterschied in der Größe der beiden Einheiten I und II, wenigstens hinsichtlich der Länge der Wellen, erkennen läßt, so ist doch die Ausbildung nach Fig. 2 bevorzugt, bei der alle Räume der beiden Einheiten I und II - auch die Wellenlagerräume 12, 12' - wenigstens annähernd gleich groß sind. Es ist ersichtlich, daß somit das gemeinsame Turbinengehäuse 2 bei der dargestellten bevorzugten Ausführungsform den zentralen Teil bildet, von aus sich nach beiden Seiten jeweils das Lagergehäuse 15 bzw. 15' und von diesem wiederum das jeweilige Kompressorgehäuse 3 bzw. 3' weg erstrecken.

Bei geringen Abgasmengen verschließt die, vorzugsweise gemeinsame, Klappe 23 beide Bypasskanäle 22 und 22'. Das Abgas strömt also vom Zufuhrkanal 9 bzw. 9. in den jeweiligen Raum 14, 14' für die Turbinenrotoren 4, 4' und gelangt jeweils über einen axialen Auslaßstutzen 19 bzw. 19' in Auslaßkanäle 20 bzw. 20', die ihrerseits in dem gemeinsamen Abgasauslaß 10 zusammengeührt sind.

Bei hohen Abgasmassen werden zusätzlich durch kontinuierliches (alternativ: schrittweises) Öffnen der gemeinsamen Klappe 23 beide Bypasskanäle 22, 22' geöffnet, so daß auch mindestens ein Teil des Abgases vom jeweiligen Zufuhrstutzen 18 bzw. 18' direkt in den Auslaßstutzen 10 gelangt.

Daraus ist aber auch ersichtlich, weshalb es unter anderem bevorzugt ist, zwei gesonderte Rotorwellen 5 zu haben, obwohl es an sich möglich wäre, eine einzige Welle 5 durch die Kanäle 20, 20' von einer Lagerstelle 5a bis zur anderen Lagerstelle 5b durchlaufend zu haben.

Im Rahmen der Erfindung sind natürlich zahlreiche Modfikationen möglich, beispielsweise könnte jede der beiden Einheiten I und II oder auch nur eine von ihnen zwei Zufuhrkanäle 9 aufweisen, beispielsweise um zwei unmittelbar hintereinanderliegende Turbinenrotoren 4 jeweils auf einer Welle 5 anzutreiben.

An Stelle einer Regelklappe 23 kann natürlich auch jede andere Form eines Ventils vorgesehen werden.

Ferner braucht das erfindungsgemäß vorgesehene gemeinsame Turbinengehäuse 2 nicht einstückig ausgebildet zu sein, sondern könnte aus zwei oder mehr Teilen bestehen. So ließe sich beispielsweise eine modulare Bauweise entwickeln, bei der ein bestehender Modul eines Turbinengehäuses 2 wahlweise mit einem zweiten solchen zum erfindungsgemäß vorgesehenen gemeinsamen Turbinengehäuse 2 oder durch Ergänzung, insbesondere im Bereiche des Stutzens 10, zu einem einzelnen Turbinengehäuse 2, gebaut werden. Bevorzugt ist allerdings eine einteilige Ausbildung des Gehäuses 2.

### Bezugszeichenliste

- 1: Turbolader
- 3: Kompressorgehäuse
- 5: Rotorwelle
- 7: Leitgitter
- 9: Zufuhrkanal f. Abgas
- 11: Abfuhrkanal f. Luft
- 13: Axialstutzen v. 3
- 15: Lagergehäuse
- 17: Stößel
- 19: Auslaßstutzen
- 21: Kompressorrotor
- 23: Klappe
- 2: Turbinengehäuse
- 4: Turbinenrotor
- 6: Kompressorraum
- 8: Lagergehäuse
- 10: Abgasauslaß
- 12 14: Turbinenrotorraum
- 16: Steuergehäuse
- 18: Zufuhrstutzen zu 9
- 20: Auslaßkanal
- 22: Bypasskanal

## Patentansprüche

1. Turbolader (1), der folgende Einheit (I) aufweist:
eine Rotorwelle (5), die eine Rotationsachse (R) definiert,
ein Turbinengehäuse (2), welches mindestens einen Zufuhrkanal (9) für Abgas und mindestens einen Abgasauslaß (10, 19, 20) aufweist und in welches ein Ende der Rotorwelle (5) ragt, und in welchem
mindestens ein Turbinenrotor (4) an dieser Rotorwelle (5) befestigt und so drehbar gelagert ist, und dessen Peripherie das Abgas zuführbar ist,
ein Kompressorgehäuse (3) mit mindestens einem Zufuhrkanal (13) für Luft, in welches das andere Ende der Rotorwelle (5) ragt, an dem
wenigstens ein Kompressorrotor (21) befestigt ist, dem die Luft zuführbar ist,
**dadurch gekennzeichnet, daß**
eine zweite solche Einheit (II), jedoch mit einem mit der ersten Einheit (I) gemeinsamen Turbinengehäuse (2) vorgesehen ist, an welchem gemeinsamen Turbinengehäuse (2) je ein Zufuhrkanal (9, 9') für je einen der beiden Turbinenrotoren (4, 4') vorgesehen ist, wobei sich die Kompressorgehäuse (3, 3') vom gemeinsamen Turbinengehäuse (2) weg erstrecken.

2. Turbolader (1) nach Anspruch 1, **dadurch gekennzeichnet, daß** jede der beiden Einheiten (I, II) eine gesonderte Rotorwelle (5) besitzt.

3. Turbolader (1) nach Anspruch 1 oder 2, **dadurch gekennzeichnet, daß** die beiden Einheiten (I, II) an einer gemeinsamen Rotationsachse (R) liegen.

4. Turbolader (1) nach einem der vorhergehenden Ansprüche, **dadurch gekennzeichnet, daß** das gemeinsame Turbinengehäuse (2) auch einen gemeinsamen vom Turbinengehäuse (2) weg führenden Abgasauslaß (10) aufweist.

5. Turbinengehäuse (2) für einen Turbolader (1) nach einem der vorhergehenden Ansprüche, mit einer einen Rotorraum (14) zur Aufnahme eines Turbinenrotors (4) aufweisenden Einheit (I), dem Abgas über einen Zufuhrkanal (9) zuführbar ist, welches Abgas über einen Abgasauslaß (10, 19, 20) abführbar ist,
**dadurch gekennzeichnet, daß**
das Gehäuse (2) einen zweiten Rotorraum (14') zur Aufnahme eines Turbinenrotors (4') einer zweiten Einheit (II) aufweist, und daß je mindestens ein Zufuhrkanal (9, 9') zu jedem Rotorraum (14, 14') vorgesehen ist.

6. Turbinengehäuse (2) nach Anspruch 5, **dadurch gekennzeichnet, daß** die beiden Rotorräume (14, 14') an einer gemeinsamen geometrischen Achse (R) liegen.

7. Turbinengehäuse (2) nach Anspruch 5 oder 6, **dadurch gekennzeichnet, daß** es einen beiden Rotorräumen (14, 14') gemeinsamen, von ihm (2) weg führenden Abgasauslaß (10) aufweist.

8. Turbinengehäuse (2) nach Anspruch 5, 6 oder 7, **dadurch gekennzeichnet, daß** es (2) eine beiden Rotorräumen (14, 14') gemeinsame Steuereinrichtung (16) aufweist, wobei insbesondere Bypasskanäle (22, 22') zur Umgehung der Rotorräume (14, 14') vorgesehen sind, denen ein gemeinsames Regelventil, besonders eine Regelklappe (23) zugeordnet ist.

9. Turbinengehäuse (2) nach eine der Ansprüche 5 bis 8, **dadurch gekennzeichnet, daß** die Räume (6, 5a, 14; 6', 5b, 14') zur Aufnahme der beiden Einheiten (I, II) wenigstens annähernd gleich groß sind.

10. Turbinengehäuse (2) nach eine der Ansprüche 5 bis 9, **dadurch gekennzeichnet, daß** das Turbinengehäuse (2) einteilig ausgebildet ist.
